# EUROPEAN PATENT APPLICATION

(11) **EP 2 595 170 A1**
(43) Date of publication of application: **22.05.2013**
(21) Application number: 11806425.2
(22) Date of filing: 09.06.2011
(51) Int. Cl.: H01H 83/02

(54) **LEAKAGE BREAKER**

(30) Priority: 13.07.2010 JP 2010158394
(71) Applicant: Panasonic Corporation, Kadoma-shi Osaka 571-8501 (JP)
(72) Inventor: TAKIGUCHI, Masahiro, 2-1-61, Shiromi, Chou-ku Osaka 540-6207 (JP); KAWASE, Tomoyuki, 2-1-61, Shiromi, Chou-ku Osaka 540-6207 (JP); AKAI, Naruaki, 2-1-61, Shiromi, Chou-ku Osaka 540-6207 (JP)
(74) Representative: Schwabe - Sandmair - Marx
(86) International application number: PCT/JP2011/003252
(87) International publication number: WO 2012/008088

(57) **Abstract**

An earth leakage circuit breaker includes a level discriminator 4 operable to compare an output level of a zero-phase-sequence current transformer 1 placed in an electric circuit with each of a plurality of reference levels set in advance and output a plurality of pulses each indicating a time period during which the output level of the zero-phase-sequence current transformer 1 has exceeded one of the plurality of reference levels; a duration counting portion 6 operable to count a time period during which each of the plurality of pulses is being continuously outputted from the level discriminator 4; a circuit interruption determiner 7 having a plurality of circuit-breaking levels associated with respective reference levels and operable to output a signal to break the electric circuit when the time period obtained from the duration counting portion has exceeded each of the circuit-breaking levels; and a relay coil-driving circuit 8 operable to drive the coil 3a of a circuit cutout relay in response to the signal outputted from the circuit interruption determiner 7.

## Description

### Technical Field

The present invention relates to anearth leakage circuit breaker and, in particular, to an earth leakage circuit breaker placed between an electrically-driven vehicle such as, for example, an electric vehicle or a plug-in hybrid vehicle and an external alternating-current power source.

### Background Art

A conventional earth leakage circuit breaker of this kind compares an output of a zero-phase-sequence current transformer with a reference level corresponding to a leakage current to be detected, then counts a time period during which the reference level has been exceeded, and energizes a coil of a circuit cutout relay, when the counted time period continues for a predetermined time period, to break (interrupt) an electric circuit.

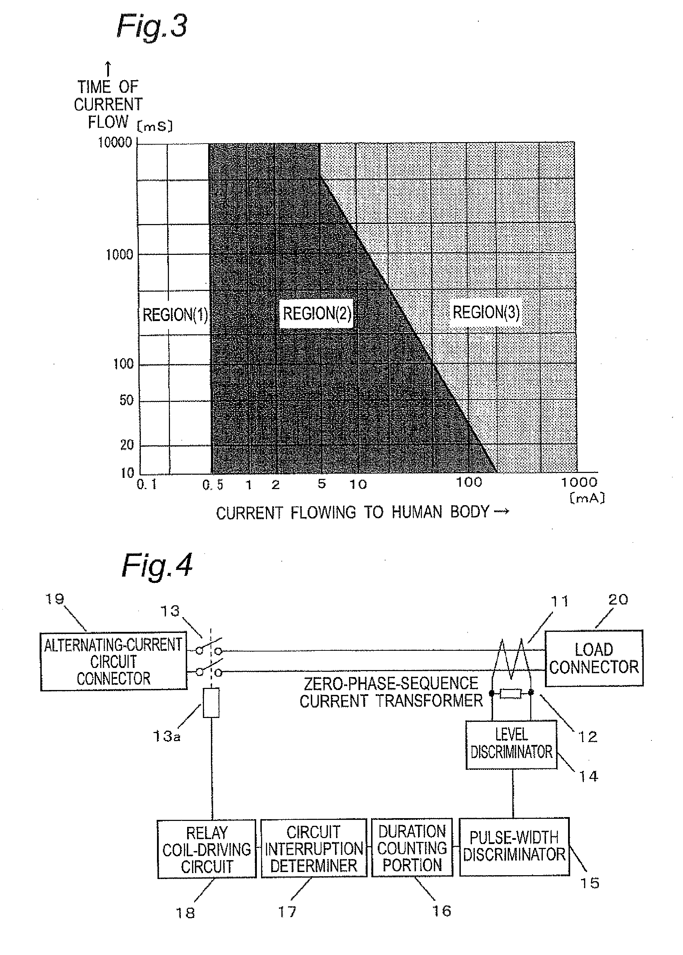

Fig. 4 is a block diagram of a conventional earth leakage circuit breaker. In the earth leakage circuit breaker of Fig. 4, an output of a zero-phase-sequence current transformer 11 for detecting a leakage current of an electric circuit is converted into a voltage by a voltage conversion resistor 12. The voltage so converted is compared with a reference level by a level discriminator 14 made up of, for example, a comparator, which in turn generates a pulse indicating a time period during which the reference level has been exceeded.

A pulse-width discriminator 15 removes narrow pulses generated by, for example, external noises to transfer only effective pulses to a duration counting portion 16.

The duration counting portion 16 counts a duration of the leakage current exceeding the reference level and transfers it to a circuit interruption determining portion 17. The circuit interruption determining portion 17 determines whether or not the duration of the leakage current exceeding the reference level exceeds a predetermined time period. If the circuit interruption determining portion 17 determines that the duration of the leakage current exceeding the reference level has exceeded the predetermined time period, a relay coil-driving circuit 18 energizes a coil 13a of a circuit cutout relay 13 to break an electric circuit.

Here, if the reference level is reduced for detection of a reduced leakage current and the electric circuit is broken within a short time period, a safer earth leakage circuit breaker can be provided, but such an earth leakage circuit breaker is likely to malfunction due to, for example, external noises.

On the other hand, if the reference level is increased and the electric circuit is broken with an increased leakage current or if the electric circuit is broken after a lapse of a long time period during which the leakage current is being detected, a safety concern may arise.

In order to enhance a resistance to external noises such as thunder, line noises or the like, the use of a plurality of comparators and adders can accurately discriminate an output of a zero-phase-sequence current transformer to suppress an influence of, for example, wave distortions caused by the external noises (see, for example, Patent Document 1).

### Prior Art Document(s)

### Patent Document(s)

Patent Document 1: JP6-245364A

### Summary of the Invention

### Problems to be solved by the Invention

However, in the construction of Patent Document 1, the reference level set for determination of the leakage current is fixed and when the leakage current continues for a predetermined time period, the electric circuit is broken, and accordingly the degree of freedom in setting the reference level or duration is low, thus posing a problem that a tolerance for external noises required to ensure safety cannot be increased.

By the way, when it comes to an electric vehicle, the electric vehicle is most commonly charged with electricity while a user is asleep, and if an electric circuit is broken due to malfunction of an earth leakage circuit breaker during charging, the electric vehicle is not charged and accordingly cannot be used.

In addition, an earth leakage circuit breaker for home use is generally used in an environment in which the user can easily notice operation of the earth leakage circuit breaker when electric lights are turned off or equipment is bought to a stop. On the other hand, the user is generally away from the electric vehicle during charging and accordingly hard to notice operation of the earth leakage circuit breaker.

The present invention has been developed to solve the above-described problems, and it is accordingly an objective of the present invention to provide an earth leakage circuit breaker that can increase a tolerance for malfunction due to, for example, external noises while ensuring safety and is accordingly unlikely to malfunction.

### Means to Solve the Problems

To solve the above conventional problems, the earth leakage circuit breaker according to the present invention includes a level discriminator operable to compare an output level of a zero-phase-sequence current transformer placed in an electric circuit with each of a plurality of reference levels set in advance and output a plurality of pulses each indicating a time period during which the output level of the zero-phase-sequence current transformer has exceeded one of the plurality of reference levels, a duration counting portion operable to count a time period during which each of the plurality of pulses is being continuously outputted from the level discriminator, a circuit interruption determiner having a plurality of circuit-breaking levels associated with respective reference levels and operable to output a signal to break the electric circuit when the time period obtained from the duration counting portion has exceeded each of the circuit-breaking levels, and a relay coil-driving circuit operable to drive a coil of a circuit cutout relay in response to the signal outputted from the circuit interruption determiner.

### Effects of the Invention

Because the earth leakage circuit breaker according to the present invention can variably set a time period before a circuit breaking depending on an amount of leakage current that has been detected by the level discriminator having the plurality of reference levels, a tolerance for malfunction due to, for example, external noises can be enhanced while ensuring safety.

Also, in addition to an influence on a human body, if an earth leakage of several hundred milliamperes or more has been detected, the electric circuit can be immediately broken because fire is likely to occur.

### Brief Description of the Drawings

Fig. 1 is a block diagram of an earth leakage circuit breaker for an electric vehicle according to a first embodiment of the present invention.
Fig. 2 is a waveform diagram indicating an example of operating waveforms according to the first embodiment of the present invention.
Fig. 3 is a graph indicating an influence of an alternating current on a human body.
Fig. 4 is a block diagram of a conventional earth leakage circuit breaker.

### Embodiment(s) for Carrying out the Invention

An embodiment of the present invention is described hereinafter with reference to the drawings. It is noted that the present invention is not limited to the embodiment.

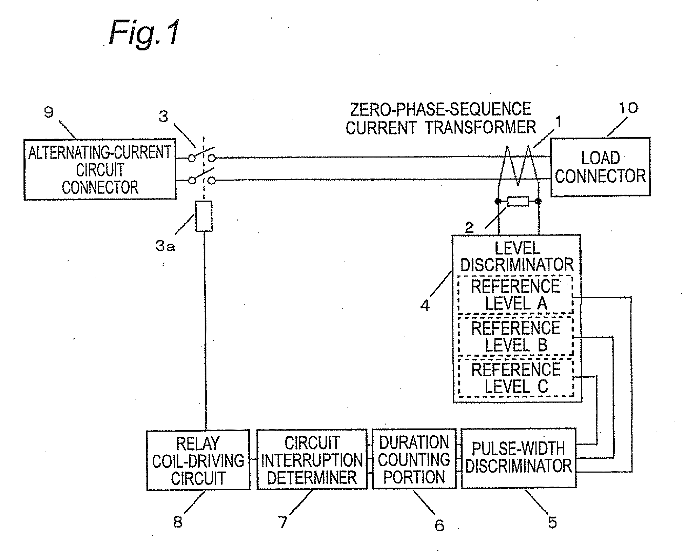

Fig. 1 is a block diagram of an earth leakage circuit breaker for an electric vehicle embodying the present invention. In Fig. 1, the earth leakage circuit breaker for an electric vehicle is generally incorporated in a charging cable that connects a commercially available power source fixed on a building and a charge inlet mounted on an electrically-driven vehicle typified by an electric vehicle to charge the electrically-driven vehicle. The earth leakage circuit breaker includes an alternating-current circuit connector 9, a circuit cutout relay 3 having a coil 3a, a zero-phase-sequence current transformer 1, and a load connector 10. The earth leakage circuit breaker further includes a voltage conversion resistor 2, a level discriminator 4, a pulse-width discriminator 5, a duration counting portion 6, a circuit interruption determiner 7 and a relay coil-driving circuit 8.

The alternating-current circuit connector 9 is a plug to be inserted into the aforementioned power source. And the load connector 10 is a plug to be inserted into the aforementioned charge inlet. The circuit cutout relay 3 breaks an electric circuit between the commercially available power source and the electrically-driven vehicle upon energization of the coil 3a. The zero-phase-sequence current transformer 1 detects and outputs a leakage current in the electric circuit. The voltage conversion resistor 2 converts an output of the zero-phase-sequence current transformer 1 into a voltage and transfers it to the level discriminator 4.

The level discriminator 4 is made up of, for example, a comparator to compare an output voltage from the voltage conversion resistor 2 with a plurality of reference levels (three reference levels A, B and C in the illustrated example). And the level discriminator 4 generates a plurality of pulses each indicating a time period during which the output voltage from the voltage conversion resistor 2 has exceeded one of the plurality of reference levels. The plurality of pulses are all inputted to the pulse-width discriminator 5.

The pulse-width discriminator 5 removes narrow pulses, which are generated due to, for example, external noises, from the inputted pulses and transfers only effective pulses to the duration counting portion 6.

The duration counting portion 6 counts, from a plurality of effective pulses inputted, a duration during which a leakage current exceeding each reference level continues and transfers it to the circuit interruption determiner 7.

The circuit interruption determiner 7 receives the duration of each reference level from the duration counting portion 6. Also, the circuit interruption determiner 7 has a circuit-breaking level for each of the plurality of reference levels. Here, the circuit-breaking level is an index that is used to determine that the electric circuit should be broken when the duration of a corresponding one of the reference levels has exceeded the circuit-breaking level. The circuit interruption determiner 7 compares the received duration with the circuit-breaking level for each reference level. If the circuit interruption determiner 7 determines that the duration of at least one reference level has exceeded the circuit-breaking level, the relay coil-driving circuit 8 drives the coil 3a of the circuit cutout relay 3 to break the electric circuit.

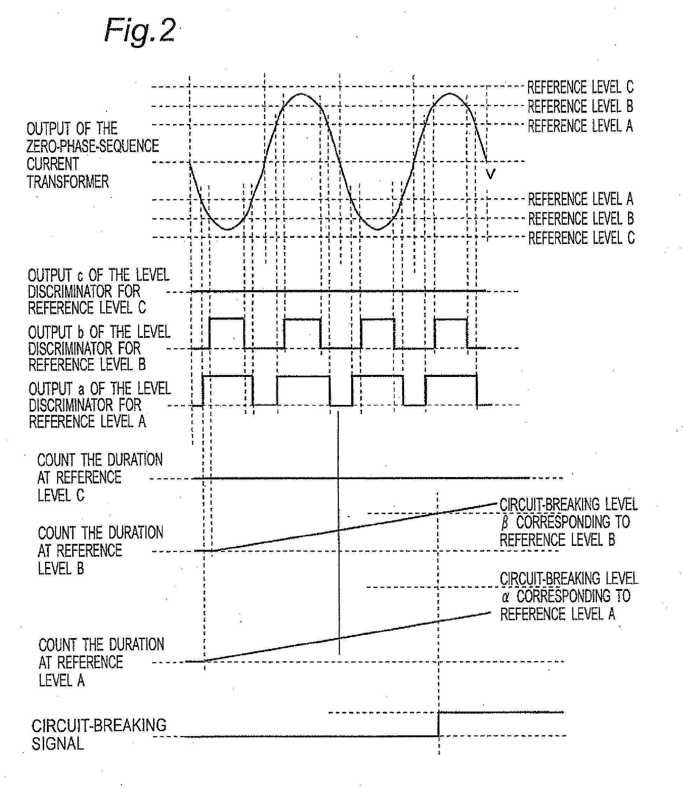

Here, Fig. 2 is a waveform diagram indicating an example of operating waveforms in an essential portion of the earth leakage circuit breaker in the case where three reference levels A, B and C are provided. The three reference levels A, B and C are set to different values and it is supposed here that there is a relationship of A<B<C.

The top of Fig. 2 indicates a relationship between an output V of the zero-phase-sequence current transformer 1 for detecting the leakage current and the reference levels A, B and C (dotted lines). The lower diagrams indicate outputs a, b and c of the level discriminator 4 for every reference levels A, B and C, respectively.

In the illustrated example, because the output V of the zero-phase-sequence current transformer 1 does not reach the reference level C, the output c is retained "Lo"(Low). On the other hand, because the output V of the zero-phase-sequence current transformer 1 exceeds the reference levels A and B, the outputs a and b are retained "Hi" (High) when the output V exceeds the reference levels A and B, but retained "Lo" in other time periods.

The outputs a, b and c are obtained by removing ineffective pulses in the pulse-width discriminator 5 and by outputting only effective pulses to the duration counting portion 6. For ease of explanation, effective pulses a, b and c are assumed to be those obtained by removing ineffective pulses from the outputs a, b and c.

The duration counting portion 6 counts the effective pulses a, b and c to count a duration or time period during which the leakage current exceeding the reference level A, B or C continues. The second diagram from the bottom in Fig. 2 indicates time periods that have elapsed before the electric circuit is broken at respective reference levels A, B and C. Specifically, the duration counted at each reference level A, B or C is indicated by a solid line and a circuit-breaking level α or β corresponding to the reference level A or B is indicated by a dotted line. The α is greater than the β to thereby set the time period to the circuit breaking at the reference level A to be longer than the time period at the reference level B. In the illustrated example, the duration being counted at the reference level A does not reach the circuit-breaking level α, but the duration being counted at the reference level B reaches the circuit-breaking level β and accordingly the circuit interruption determiner 7 outputs to the relay coil-driving circuit 8 a circuit-breaking signal as indicated by the bottom of Fig. 2, thus enabling the relay coil-driving circuit 8 to drive the coil 3a of the circuit cutout relay 3 to break the electric circuit.

It is to be noted here that in Fig. 2 the output V does not reach the reference level C and, accordingly, the duration at the reference level C is not counted and that the circuit-breaking level at the reference level C is not indicated.

Although in Fig. 2 the reference levels are indicated by three operating waveforms, an increased number of reference levels can sensitively control the circuit breaking. By way of example, Fig. 3 indicates an influence of an alternating current on a human body with reference to IEC/TR2 60479-1. In Fig. 3, a region (1) is a region in which the human body has little reaction, a region (2) is a region in which the human body is generally subject to no harmful physiological influence, and a region (3) is a region in which the human body is likely to be subject to some damages. If some circuit-breaking levels are set within the region (2) close to a boundary between the region (2) and the region (3), a tolerance for malfunction due to, for example, external noises can be increased while ensuring safety.

Also, in Fig. 1, if the pulse-width discriminator 5 determines that a pulse indicating a time period exceeding the highest level (reference level C in the example of Fig. 2) of the reference levels is an effective pulse having a predetermined width or more, it is preferred that the electric circuit be immediately broken irrespective of a value counted by the duration counting portion 6. By doing so, even if an earth leakage of several hundred milliamperes or more that is at risk for, for example, fire occurs, a reduced time period before the circuit breaking can prevent damage expansion.

### Industrial Applicability

As described above, because the earth leakage circuit breaker for an electric vehicle according to the present invention can change the time period before the circuit breaking depending on an amount of leakage current, a tolerance for noises can be enhanced while ensuring safety and, hence, is applicable to generally-used earth leakage circuit breakers.

### Description of the Reference numerals

| | |
|---|---|
| 1 | Zero-phase-sequence current transformer |
| 2 | Voltage conversion resistor |
| 3 | Circuit cutout relay |
| 4 | Level discriminator |
| 5 | Pulse-width discriminator |
| 6 | Duration counting portion |
| 7 | Circuit interruption determiner |
| 8 | Relay coil-driving circuit |
| 9 | Alternating-current circuit connector |
| 10 | Load connector |

## Claims

1. An earth leakage circuit breaker comprising:
a level discriminator operable to compare an output level of a zero-phase-sequence current transformer placed in an electric circuit with each of a plurality of reference levels set in advance and output a plurality of pulses each indicating a time period during which the output level of the zero-phase-sequence current transformer has exceeded one of the plurality of reference levels;
a duration counting portion operable to count a time period during which each of the plurality of pulses is being continuously outputted from the level discriminator;
a circuit interruption determiner having a plurality of circuit-breaking levels associated with respective reference levels and operable to output a signal to break the electric circuit when the time period obtained from the duration counting portion has exceeded each of the circuit-breaking levels; and
a relay coil-driving circuit operable to drive the coil of a circuit cutout relay in response to the signal outputted from the circuit interruption determiner.

2. The earth leakage circuit breaker according to claim 1, wherein the time period of one of the plurality of circuit-breaking levels before the circuit breaking is longer or shorter than that of another circuit-breaking level of a lower or higher reference level, respectively.

3. The earth leakage circuit breaker according to claim 1, wherein if a pulse indicating a time period exceeding a highest one of the reference levels has a predetermined width or more, the circuit interruption determiner outputs the signal irrespective of a value counted by the duration counting portion.

4. The earth leakage circuit breaker according to claim 1, wherein the circuit-breaking levels are set in a region in which a human body is subject to no harmful physiological influence, based on IEC/TR2 60479-1 indicating an influence of an alternating current on the human body.
